Europäisches Patentamt

European Patent Office

Office européen des brevets

(11) Numéro de publication : **0 391 878 B1**

# FASCICULE DE BREVET EUROPEEN

(45) Date de publication du fascicule du brevet :
**11.11.92 Bulletin 92/46**

(51) Int. Cl.⁵ : **F28F 25/08**

(21) Numéro de dépôt : **90870046.1**

(22) Date de dépôt : **28.03.90**

(54) **Dispositif de garnissage d'installation de mise en contact de liquide et de gaz.**

(30) Priorité : **05.04.89 BE 8900377**

(43) Date de publication de la demande :
**10.10.90 Bulletin 90/41**

(45) Mention de la délivrance du brevet :
**11.11.92 Bulletin 92/46**

(84) Etats contractants désignés :
**AT CH DE DK ES FR GB GR IT LI LU NL SE**

(56) Documents cités :
**EP-A- 0 290 708**
**FR-A- 1 591 072**
**FR-A- 2 557 472**
**US-A- 3 952 077**

(73) Titulaire : **HAMON-SOBELCO S.A.**
**50-58, Rue Capouillet**
**B-1060 Bruxelles (BE)**

(72) Inventeur : **Monjoie, Michel Willy Jean-Paul**
**René**
**33, rue Frans Merjay**
**B-1060 Bruxelles (BE)**

(74) Mandataire : **de Kemmeter, François et al**
**Cabinet Bede 13, avenue Antoine Depage**
**B-1050 Bruxelles (BE)**

**Description**

La présente invention concerne une feuille de ruissellement selon le préambule de la revendication 1. Une telle feuille est connue selon FR-A-1 591 072 qui décrit une feuille de ruissellement pour dispositif de garnissage, sans préciser que celui-ci est destiné à une installation de mise en contact à contre-courant d'un liquide et d'un gaz. ladite feuille présente une alternance de zones à bossage et de zones ondulées dans le sens horizontal, ce qui limite la hauteur des feuilles en service.

Les installations de mise en contact d'un liquide avec un gaz comportent une chambre ou cheminée dans laquelle est installé le dispositif de garnissage. De tels dispositifs peuvent être constitués d'un assemblage de feuilles, généralement profilées.

De tels assemblages sont notamment décrits dans les brevets FR 2 183 704 (DE-C 2 322 683) (US 3 830 684), FR 2 263 808 (DE-C 25 08 722) (GB 1 495 788), EP-B 28 545 (US 4 344 899), FR 2 557 472 (US 4 581 183) (DE 34 47 895) et EP 290 708.

Le garnissage révélé par FR 2 183 704 est constitué d'une succession de feuilles alternativement planes et ondulées, les feuilles ondulées étant de profil anguleux et pourvues de saillies dans les angles.

Le garnissage révélé par FR 2 263 808 constitue un perfectionnement du précédent, grâce à la réduction des longueurs des lignes de contacts entre les feuilles planes et ondulées, grâce à la réduction périodique ou quasi-périodique de l'amplitude de l'ondulation des feuilles ondulées, le contact avec les feuilles planes n'ayant pas lieu le long des crêtes des ondulations d'amplitudes réduites.

Le garnissage révélé par EP 28 545 est constitué de feuilles ondulées successives identiques qui n'ont plus entre elles que des points de contacts constitués par des bossages et des méplats sur les crêtes des ondulations, les feuilles étant constituées d'un nombre pair de zones successives (dans une direction parallèle aux crêtes des ondulations, c'est-à-dire verticalement lorsque le garnissage est dans son installation) d'égales longueurs, dont les ondulations sont alternativement de grande amplitude et de petite amplitude, une feuille sur deux ayant subi une rotation de 180° par rapport aux deux feuilles adjacentes, autour d'un axe (horizontal) perpendiculaire aux feuilles, de sorte qu'une zone ondulée de grande amplitude fasse toujours face à une zone ondulée de petite amplitude, les concavités se correspondant. Une feuille sur deux a tourné de 180° dans son propre plan autour de son point central. Les concavités des ondulations des zones de faible amplitude sont alignées avec celles de zones de grande amplitude (les ondulations de grande amplitude et celles de petite amplitude sont en phase). La fabrication des feuilles a lieu en bandes de longueur indéterminée et de largeur égale à un nombre pair de zones, ou un nombre entier de paires de zones (une paire = une zone de grande amplitude adjacente à une zone de petite amplitude), généralement deux ou quatre paires; les bandes pouvant ensuite éventuellement être coupées entre deux paires successives de zones pour constituer des paquets de garnissage dont la hauteur est généralement de une ou de deux paires de zones (soit généralement 25 ou 50 cm de haut) et dont la largeur est indépendante (dans certaines limites) de la fabrication des feuilles et est définie par le système de fixation du garnissage dans l'installation de mise en contact des fluides, et est, par exemple, une certaine valeur entre 2 m et 3 m.

Le garnissage révélé par FR 2 557 472 constitue une amélioration de celui révélé par EP 28 545. Il y est similaire en ce sens que ses feuilles ont aussi deux types de zones d'ondulations, d'amplitudes différentes, formant des paires de zones, qu'il y a un nombre entier de paires de zones, que la liaison entre les feuilles a lieu en de multiples points de contact spécialement prévus à cet effet (et non suivant des lignes de contact parallèles aux ondulations), et que la fabrication des feuilles a lieu semblablement en bande de longueur indéterminée.

Le garnissage de FR 2 557 472 diffère de celui de EP 28 545 par le fait que les concavités des ondulations des zones d'un type d'amplitude sont alignés avec des convexités des zones de l'autre type d'amplitude (les ondulations de grande amplitude et celles de petite amplitude sont en opposition de phase - déphasées de 180°), et par le fait que les dispositifs d'entretoisement ne sont pas situés dans les zones de l'une ou l'autre amplitude, mais dans des zones de transition entre celles de grande amplitude et celles de petite amplitude. Le garnissage est ici constitué de la juxtaposition de feuilles identiques dont une sur deux a subi une rotation de 180° dans l'espace autour d'un axe situé dans son plan à mi-hauteur. Un type de zone ondulée fait donc toujours face à l'autre type de zone, leurs concavités étant toujours en concordance.

Le garnissage révélé EP 290 708 a été spécialement conçu pour les eaux fortement chargées de matières en suspension. Il est caractérisé par la juxtaposition de feuilles présentant deux zones d'ondulation de même pas, mais d'amplitudes différentes, zones d'égale largeur, situées, lorsque le garnissage est en service, côte à côte et non plus l'une au-dessus de l'autre, les feuilles étant disposées alternativement dans un sens et dans celui obtenu après rotation de 180° dans l'espace autour de la ligne séparant les deux zones. Les ondulations de deux feuilles successives sont en concordance de phase, leurs zones se faisant face étant d'amplitudes différentes. Comme pour le garnissage des brevets EP 28 545 et FR 2 557 472, deux feuilles contiguës n'ont entre elles que des points de contacts constitués de bossages dans les feuilles.

Le garnissage selon la présente invention est également constitué d'une juxtaposition de feuilles ondulées et constitue par rapport aux garnissages précédents une amélioration importante des performances globales qu'on peut en attendre dans une installation de mise en contact d'un liquide et d'un gaz, tout en ayant une faible susceptibilité à l'encrassement.

Les performances globales d'un garnissage sont caractérisées en définitive par le coût total constitué des frais d'investissement et des frais d'exploitation de l'installation de mise en contact des deux fluides.

Les performances physiques d'un garnissage sont caractérisées par son coefficient d'échange thermique, fonction du débit d'air qui le traverse, et par les pertes de charge qu'il impose à ce flux d'air. Pour un garnissage d'un type donné constitué de feuilles de ruissellement, plus on augmente le nombre de feuilles, en diminuant, par exemple, les amplitudes des ondulations, plus s'accroît ainsi la surface d'échange par unité de volume, plus grand est l'échange thermique par unité de volume de garnissage, et donc plus petite et moins coûteuse sera l'installation de mise en contact, malgré le coût unitaire plus élevé du garnissage.

Mais les pertes de charge seront aussi plus élevées, ce qui pour les installations à ventilateurs accroît la consommation d'énergie électrique et éventuellement les frais d'investissement (ensemble moteur-réducteur-ventilateur plus puissant), et pour les réfrigérants à tirage naturel accroît nettement les frais d'investissement par la nécessité d'une plus grande hauteur de tirage. Pour chaque type de garnissage, il y a un optimum économique quant à la compacité du garnissage, qui réalise un compromis entre des coefficients de transfert de chaleur aussi élevés que possible et des pertes de charge aussi faibles que possible.

Pour chaque type de ruissellement, il y a alors lieu de faire varier les divers paramètres le caractérisant en recherchant chaque fois l'optimum économique d'installation de mise en contact de fluides. Enfin, de telles études se feront non seulement pour les divers types de ruissellement connus, mais également pour de nombreux garnissages nouvellement conçus.

La feuille de ruissellement selon l'invention est l'aboutissement de telles recherches. Il définit le type optimal de garnissage pour installation de mise en contact d'un liquide et d'un gaz. Il permet, par exemple, de remplacer dans des tours existants, sans en dégrader les performances, les garnissages définis par les brevets EP 28 545 ou FR 2 557 472 où la compacité est d'une cinquantaine de feuilles par mètre de largeur de garnissage par un garnissage selon l'invention où la compacité n'est plus que d'une quarantaine de feuilles par mètre de largeur de garnissage.

Les objectifs de l'invention sont atteints par une feuille de ruissellement telle que définie à la revendication 1.

De préférence, les ondulations secondaires ont un profil anguleux. En particulier, les ondulations primaires et secondaires se croisent à angle droit. Avantageusement, tous les bossages d'une même verticale, telle que définie plus haut, sont du même côté de la feuille tandis que tous les bossages d'une même horizontale, telle que définie plus haut, alternent d'un côté et de l'autre de chaque feuille. Ces bossages d'une même horizontale ont vis-à-vis des zones de base contiguës d'un côté une faible dénivellation et de l'autre côté une forte dénivellation, et les bossages de la ligne horizontale suivante ont leurs dénivellations disposées à l'opposée, si bien que les faibles dénivellations des bossages d'une ligne horizontale font face aux faibles dénivellations des bossages de la ligne horizontale suivante, la longueur ondulée (hauteur, lorsque la feuille est en service) de deux zones de base contiguës n'étant donc pas la même.

En variante, tous les bossages d'une même verticale, telle que définie plus haut, alternent de part et d'autre de la feuille tandis que tous les bossages d'une même horizontale, telle que définie plus haut, alternent d'un côté et de l'autre de la feuille et ont vis-à-vis des zones de base contiguës d'un côté une faible dénivellation et de l'autre côté une forte dénivellation et les bossages de la ligne horizontale suivante ont leurs dénivellations disposées en sens contraire, si bien que les faibles dénivellations des bossages d'une ligne horizontale font face aux fortes dénivellations des bossages de la ligne horizontale suivante, la longueur ondulée (hauteur, lorsque la feuille est en service) de deux zones de base contiguës étant la même.

A partir de feuilles de ruissellement identiques, telles que définies ci-dessus, en les fixant les unes aux autres par soudure ou par collage des bossages précités, on peut constituer un dispositif de garnissage conforme à l'invention, convenant pour une installation de mise en contact à contre-courant d'un liquide et d'un gaz.

Les ondulations de deux feuilles contiguës sont en place avec correspondance de leurs lignes inter-zones. Ainsi, la distance entre deux feuilles, perpendiculairement aux plans médians des feuilles, est la même partout sauf aux endroits des bossages où elle est alternativement nulle et maximale le long des lignes inter-zones.

L'invention est maintenant décrite ci-après en se référant aux dessins ci-annexés dans lesquels:

la figure 1 est une vue en plan de dessus d'une tranche de feuille limitée par deux lignes de symétrie des ondulations de base,

la figure 2 est une coupe suivant la ligne A-A de la figure 1,

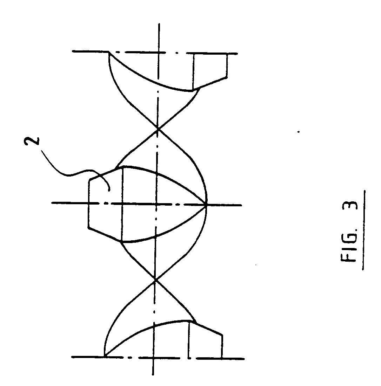

la figure 3 est, à plus grande échelle, une coupe suivant la ligne X-X de la figure 2,

la figure 4 est une coupe suivant la ligne B-B de la figure 1,

la figure 5 est, à plus grande échelle, une représentation du détail Y repéré sur la figure 4,

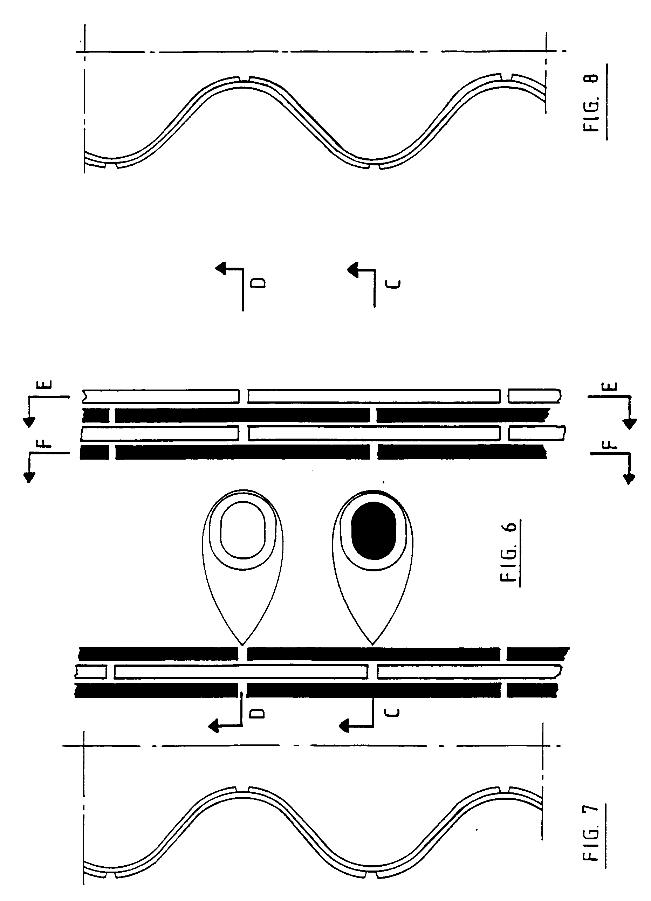

la figure 6 représente, en plus et à plus grande échelle, un détail de zone transitoire de la feuille représentée sur la figure 1,

les figures 7 à 10 sont diverses vues en coupe prises dans cette zone transitoire respectivement suivant les lignes E-E, F-F, C-C et D-D.

Dans ces différentes figures, les mêmes notations de référence désignent les mêmes éléments.

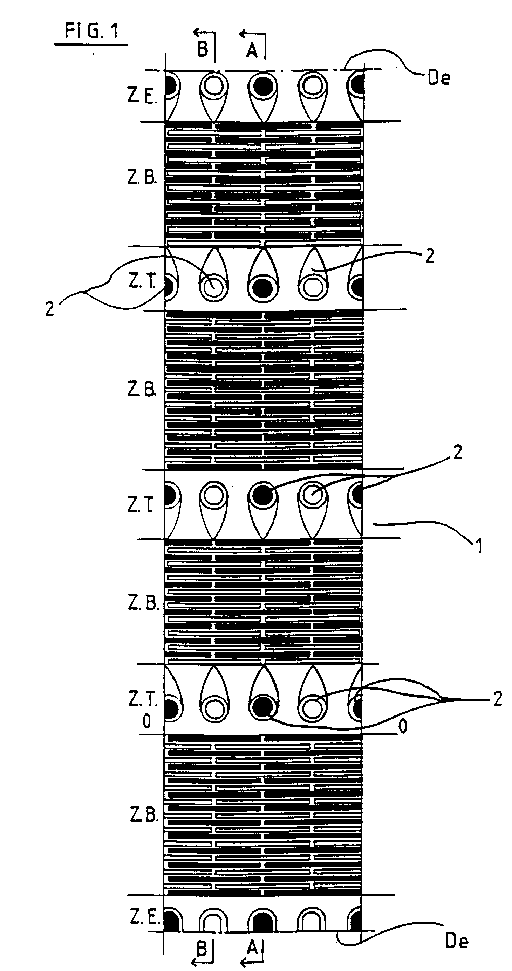

Sur la figure 1, on voit en plan une feuille de ruissellement 1 pourvue de deux paires de zones ondulées d'égale hauteur, chaque paire comprenant deux zones de base ZB séparées par une zone de transition ZT, les deux paires étant également séparées l'une de l'autre par une zone de transition ZT. Chaque extrémité de la feuille 1 comporte une zone d'entrée ZE. L'horizontale de la figure 1 correspond à la verticale de la feuille en service. Sur la figure 1, les traits noirs correspondent à des bosses et les traits clairs à des creux.

Chaque zone ondulée comporte deux types d'ondulations.

Un premier type d'ondulation dit primaire d'allure sinusoïdale, visible plus particulièrement sur les figures 7 et 8, présente des lignes de crêtes parallèles à la verticale de la feuille en service, c'est-à-dire parallèles aux lignes A-A et B-B de la figure 1. Dans la forme représentée sur les figures, l'ondulation primaire comporte soit deux crêtes et trois creux, soit trois crêtes et deux creux. Si l'on considère deux zones de base contiguës, leurs ondulations primaires sont décalées d'un demi-pas. Cela se voit en comparant, par exemple, les traits noirs de la zone de base ZB inférieure à ceux de la zone de base immédiatement au-dessus.

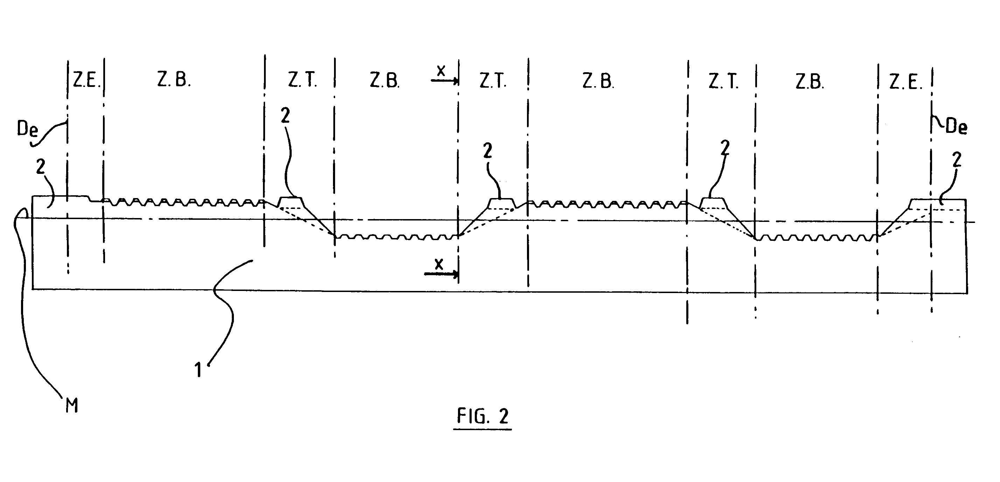

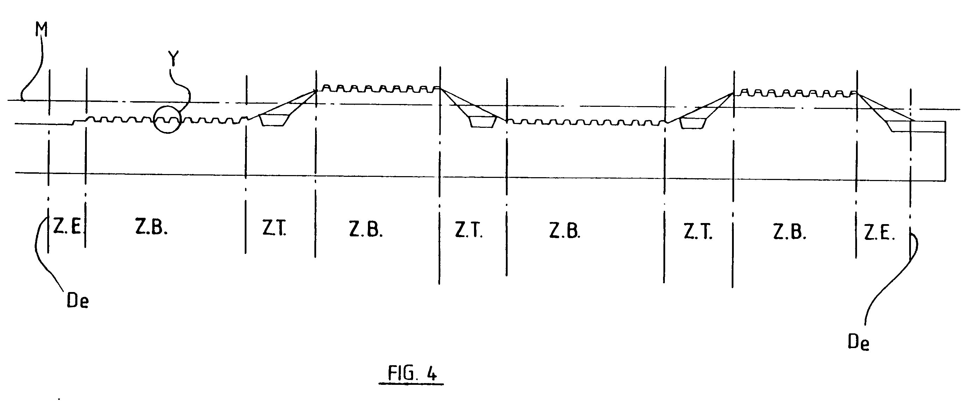

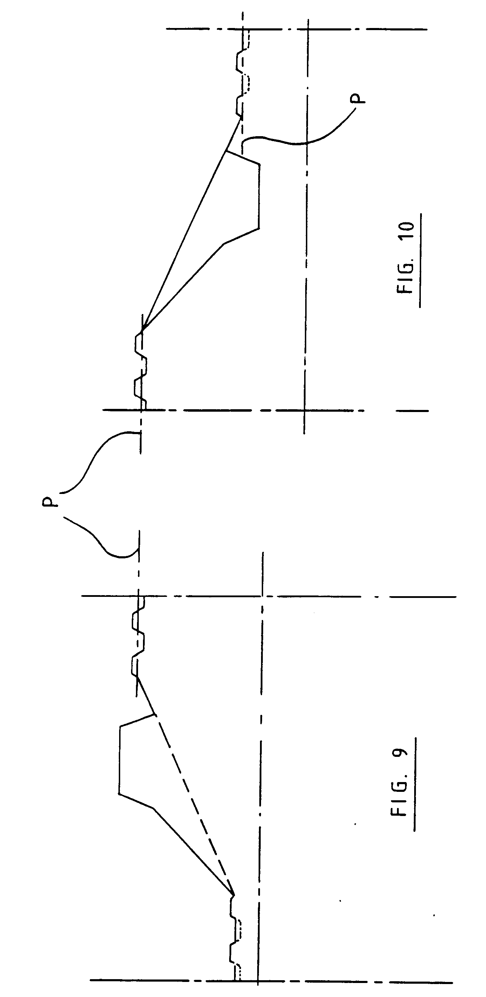

La feuille de garnissage 1 présente un deuxième type d'ondulation, dit secondaire, de bien plus faible amplitude et de bien plus petit pas que les ondulations précédentes auxquelles elles se superposent en les croisant. Dans la forme de réalisation représentée et préférentielle, ces ondulations secondaires croisent les ondulations primaires perpendiculairement et ont un profil anguleux, visible sur les figures 2, 4, 5, 9 et 10.

Ces figures montrent également que la longueur ondulée (hauteur, lorsque la feuille est en service) de deux zones contiguës n'est pas la même. Cela résulte de la disposition des bossages 2 d'entretoisement et de fixation des feuilles 1 entre elles. Les bossages 2 sont situés entre les zones d'ondulations ZB et dans l'alignement des crêtes et des fosses des ondulations primaires. Ces bossages sont en saillie alternativement d'un côté et de l'autre de chaque feuille le long des lignes inter-zones (par exemple la ligne O-O sur la figure 1). Comme on le voit sur la figure 1, tous les bossages d'une même verticale (dans la position de service de la feuille), par exemple, ceux représentés en noir le long de la ligne A-A de la figure 1, sont du même côté de la feuille. Etant donné l'opposition de phase (décalage d'un demi-pas) des ondulations primaires d'une zone ZB à la zone ZB contiguë, tous les bossages d'une même horizontale (en position de service de la feuille) ont d'un côté (c'est-à-dire au-dessus ou bien en-dessous ou à droite ou à gauche sur la figure 2) une faible dénivellation (vers la crête d'une ondulation) et de l'autre côté une forte dénivellation (vers le creux d'une ondulation), tandis que la ligne horizontale suivante de bossages est dans une structure opposée, c'est-à-dire que du côté où il y avait précédemment une forte dénivellation, il y a maintenant une faible dénivellation et vice-versa. Il suffit de comparer les bossages répartis, par exemple, le long de la ligne O-O, à ceux de la première parallèle à celle-ci.

Il s'ensuit qu'une zone est séparée de ses deux lignes de bossages, respectivement en haut et en bas, soit par une faible dénivellation, soit par une forte dénivellation, tandis que c'est l'inverse pour chacune des deux zones contiguës.

Une zone par rapport à laquelle les bossages adjacents présentent une forte dénivellation est nécessairement plus courte qu'une zone (les deux zones adjacentes) par rapport à laquelle les bossages présentent une faible dénivellation, pour éviter d'avoir une pente trop raide pour la dénivellation, ce qui amènerait des difficultés de façonnage des feuilles, des dangers de déchirure, une fragilité de la feuille, mais également de plus grandes pertes de charges au passage de l'air, sans compensation thermique. Cela se voit en comparant les zones ZB de part et d'autre de la ligne O-O sur la figure 1.

Toutefois, en variante, les bossages de mêmes verticales peuvent alterner de l'un au suivant. Ainsi, chaque zone aurait d'un côté (par exemple en haut) ses bossages sous faible dénivellation, et de l'autre côté (dès lors en bas dans cet exemple), ses bossages sous forte dénivellation. Il en résulterait que les hauteurs ondulées de toutes les zones pourraient être égales.

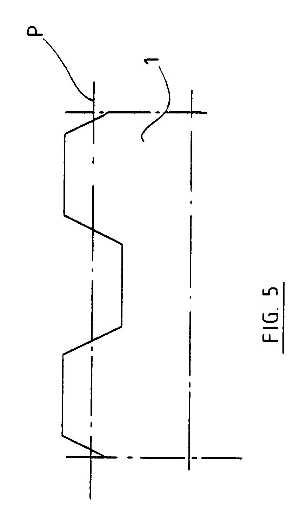

Sur les figures 5, 9 et 10, P désigne la surface médiane du profil de base. Sur les figures 1, 2 et 4, De désigne la ligne de découpe et M un plan médian.

En fixant les feuilles 1 entre elles pour former un paquet de garnissage de ruissellement, on oriente les feuilles de façon que les ondulations primaires de deux feuilles contiguës soient en phase, leurs lignes inter-zones correspondant entre elles. De plus, la distance entre deux feuilles, perpendiculairement aux plans médians M des feuilles, est la même partout, sauf aux endroits des bossages où elle est alternativement nulle et maximale le long des lignes inter-zones.

## Revendications

1. Feuille de ruissellement pour dispositif de garnissage d'une installation de mise en contact à contre-courant d'un liquide et d'un gaz présentant une alternance de zones ondulées de base (ZB) et de zones de transition (ZT) pourvues de bossages (2) d'entretoisement et de fixation des feuilles entre elles, les zones de base (ZB) comportant deux types d'ondulations à savoir des ondulations primaires d'allure sinusoïdale dont les lignes de crêtes s'étendent dans le sens vertical de la feuille lorsque celle-ci est en service, et des ondulations secondaires de bien plus faible amplitude et de bien plus petit pas que les ondulations primaires auxquelles elles se superposent en les croisant, **caractérisée** en ce que les zones ondulées de base (ZB) et les zones de transition (ZT) alternent entre elles dans le sens vertical de la feuille tel que défini ci-dessus, en ce que les ondulations primaires d'une zone de base sont chaque fois décalées d'un demi-pas par rapport à celles de la zone de base voisine, et en ce que les bossages sont disposés en saillie d'un côté et de l'autre de la feuille en étant rangés le long d'une ligne horizontale et chaque bossage est disposé dans l'alignement d'une crête d'ondulation primaire.

2. Feuille de ruissellement suivant la revendication 1, caractérisée en ce que les ondulations secondaires ont un profil anguleux.

3. Feuille de ruissellement suivant l'une quelconque des revendications 1 et 2, caractérisée en ce que les ondulations primaires et secondaires se croisent à angle droit.

4. Feuille de ruissellement suivant l'une quelconque des revendications 1 à 3, caractérisée en ce que tous les bossages (2) d'une même verticale, telle que définie plus haut, sont du même côté de la feuille tandis que tous les bossages d'une même horizontale, telle que définie plus haut, alternent d'un côté et de l'autre de chaque feuille et ont vis-à-vis des zones de base contiguës d'un côté une faible dénivellation et de l'autre côté une forte dénivellation et que les bossages de la ligne horizontale suivante ont leurs dénivellations disposées à l'opposée, si bien que les faibles dénivellations des bossages d'une ligne horizontale font face aux faibles dénivellations des bossages de la ligne horizontale suivante, la longueur ondulée (hauteur, lorsque la feuille est en service) de deux zones de base (ZB) contiguës n'étant donc pas la même.

5. Feuille de ruissellement suivant l'une quelconque des revendications 1 à 3, caractérisée en ce que tous les bossages (2) d'une même verticale, telle que définie plus haut, alternent de part et d'autre de la feuille tandis que tous les bossages d'une même horizontale, telle que définie plus haut, alternent d'un côté et de l'autre de la feuille et ont vis-à-vis des zones de base contiguës d'un côté une faible dénivellation et de l'autre côté une forte dénivellation et les bossages de la ligne horizontale suivante ont leurs dénivellations disposées en sens contraire, si bien que les faibles dénivellations des bossages d'une ligne horizontale font face aux faibles dénivellations des bossages de la ligne horizontale suivante, la longueur ondulée (hauteur, lorsque la feuille est en service) de deux zones de base (ZB) contiguës étant la même.

6. Dispositif de garnissage pour installation de mise en contact à contre-courant d'un liquide et d'un gaz constitué de feuilles de ruissellement identiques, fixées les unes aux autres par leurs bossages et ménageant entre elles des passages, caractérisé en ce qu'il se compose au moins partiellement des feuilles de ruissellement selon l'une quelconque des revendications 1 à 5.

7. Dispositif de garnissage suivant la revendication 6, caractérisé en ce que les ondulations de deux feuilles contiguës conformes à l'une quelconque des revendications 1 à 5 sont en phase avec correspondance de leurs lignes inter-zones.

8. Dispositif de garnissage suivant la revendication 7, caractérisé en ce que la distance entre deux feuilles, perpendiculairement aux plans médians des feuilles, est la même partout sauf aux endroit des bossages où elle est alternativement nulle et maximale le long des lignes inter-zones.

## Patentansprüche

1. Berieselungsfolie für eine Füllkörpereinrichtung einer Anlage, die in Gegenströmung eine Flüssigkeit und ein Gas in Kontakt bringt, mit abwechselnd wellenförmigen Basiszonen (ZB) und Übergangszonen (ZT), die mit Vorsprüngen (2) zur Verstrebung und zur Befestigung der Folien untereinander versehen sind, wobei die Basiszonen (ZB) zwei Arten von Wellen aufweisen, nämlich Primärwellen mit Sinusform, deren Scheitellinien sich in der vertikalen Richtung der Folie, wenn diese in Betrieb ist, erstrecken, und Sekundärwellen viel geringerer Amplitude und viel geringerer Ganghöhe als die Primärwellen, denen sie sich diese kreuzend überlagern, dadurch gekennzeichnet, daß die wellenförmigen Basiszonen (ZB) und die Übergangszonen (ZT) miteinander in der oben definierten vertikalen Richtung der Folie abwechseln, daß die Primärwellen einer Basiszone jedesmal um eine halbe Ganghöhe gegenüber denen der benachbarten Basiszone versetzt sind, und daß die Vorsprünge auf der einen und der anderen Seite der Folie vorspringend angeordnet sind, indem sie längs einer horizontalen Linie geordnet sind und jeder Vorsprung in der Fluchtlinie eines primären Wellenscheitels angeordnet ist.

2. Berieselungsfolie nach Anspruch 1, dadurch gekennzeichnet, daß die Sekundärwellen ein Winkelprofil aufweisen.

3. Berieselungsfolie nach einem der Ansprüche 1 und 2, dadurch gekennzeichnet, daß die Primärwellen und die Sekundärwellen sich unter einem rechten Winkel kreuzen.

4. Berieselungsfolie nach einem der Ansprüche 1 bis 3, dadurch gekennzeichnet, daß alle Vorsprünge (2) einer gleichen Vertikale, wie oben definiert, auf der gleichen Seite der Folie sind, während alle Vorsprünge einer gleichen Horizontale, wie oben definiert, auf einer Seite und der anderen Seite jeder Folie abwechseln und gegenüber angrenzenden Basiszonen einer Seite einen geringen Niveauunterschied und auf der anderen Seite einen starken Niveauunterschied aufweisen und daß die Vorsprünge der folgenden horizontalen Linie ihre Niveauunterschiede entgegengesetzt angeordnet haben, so daß die geringen Niveauunterschiede der Vorsprünge einer horizontalen Linie den geringen Niveauunterschieden der Vorsprünge der folgenden horizontalen Linie zugewandt sind, wobei die gewellte Länge (Höhe, wenn die Folie in Betrieb ist) zwei angrenzender Basiszonen (ZB) daher nicht gleich ist.

5. Berieselungsfolie nach einem der Ansprüche 1 bis 3, dadurch gekennzeichnet, daß alle Vorsprünge (2) einer gleichen Vertikalen, so wie oben definiert, abwechselnd auf der einen und der anderen Seite der Folie sind, während alle Vorsprünge einer gleichen Horizontalen, wie oben definiert, sich auf beiden Seiten der Folie abwechseln und gegenüber angrenzenden Basiszonen einer Seite einen geringen Niveauunterschied und der anderen Seite einen starken Niveauunterschied aufweisen und die Vorsprünge der folgenden horizontalen Linie ihre Niveauunterschiede im umgekehrten Sinn angeordnet aufweisen, so daß die geringen Niveauunterschiede der Vorsprünge einer horizontalen Linie den geringen Niveauunterschieden der Vorsprünge der folgenden horizontalen Linie zugewandt sind, wobei die gewellte Länge (Höhe, wenn die Folie in Betrieb ist) der zwei aneinander angrenzenden Basiszonen (ZB) daher gleich ist.

6. Füllkörpereinrichtung für eine Anlage, um im Gegenstrom eine Flüssigkeit mit einem Gas in Kontakt zu bringen, gebildet von identischen Berieselungsfolien, die an einander durch ihre Vorsprünge befestigt sind und zwischen sich Durchgänge aussparen, dadurch gekennzeichnet, daß sie sich mindestens teilweise aus Berieselungsfolien nach einem der Ansprüche 1 bis 5 zusammensetzt.

7. Füllkörpereinrichtung nach Anspruch 6, dadurch gekennzeichnet, daß die Wellen zweier aneinander angrenzender Folien nach einem der Ansprüche 1 bis 5 in Phase mit Übereinstimmung ihrer Zwischenzonenlinien sind.

8. Füllkörpereinrichtung nach Anspruch 7, dadurch gekennzeichnet, daß der Abstand zwischen zwei Folien, senkrecht zu den Mittelebenen der Folien, überall der gleiche ist mit Ausnahme der Stellen der Vorsprünge, wo er abwechselnd Null und maximal längs der Zwischenzonenlinien ist.

## Claims

1. Trickling sheet for packing device of an installation for placing a liquid and a gas in counter-current contact having alternating corrugated base regions (ZB) and transition regions (ZT) provided with bosses (2) for spacing and fastening the sheets together, the base regions (ZB) comprising two types of corrugations namely primary corrugations of sinusoidal shape whose lines of peaks extend in the vertical direction of the sheet when the latter is in service, and secondary corrugations of much smaller amplitude and much narrower pitch than the primary corrugations on which they are superimposed by crossing them, characterised in that the corrugated base regions (ZB) and the transition regions (ZT) alternate with one another in the vertical direction of the sheet as defined above, in that the primary corrugations of a base region are offset on each occasion by a half-pitch with respect to those of the neighbouring base region, and in that the bosses are arranged projecting from one side and the other of the sheet while being arrayed along a horizontal line and each boss is arranged in alignment with a primary corrugation peak.

2. Trickling sheet according to Claim 1, characterised in that the secondary corrugations have an angular profile.

3. Trickling sheet according to either one of Claims 1 and 2, characterised in that the primary and secondary corrugations cross at right angles.

4. Trickling sheet according to any one of Claims 1 to 3, characterised in that all the bosses (2) of a given vertical, as defined above, are on the same side of the sheet whereas all the bosses of a given horizontal, as defined above, alternate on one side and the other of each sheet and have a small unevenness opposite the contiguous base regions on one side and a large unevenness on the other side and in that the bosses of the next horizontal line have their unevennesses arranged contrary, so that the small unevennesses of the bosses of a horizontal line confront the small unevennesses of the bosses of the next horizontal line, the corrugated length (height, when the sheet is in service) of two contiguous base regions (ZB) therefore not being the same.

5. Trickling sheet according to any one of Claims 1 to 3, characterised in that all the bosses (2) of a given vertical, as defined above, alternate on either side of the sheet whereas all the bosses of a given horizontal, as defined above, alternate on one side and on the other of the sheet and have a small unevenness opposite the contiguous base regions on one side and a large unevenness on the other side and the bosses of the next horizontal line have their unevennesses arranged contrariwise, so that the small unevennesses of the bosses of a horizontal line confront the small unevennesses of the bosses of the next horizontal line, the corrugated length (height, when the sheet is in service) of two contiguous base regions (ZB) being the same.

6. Packing device for installation for placing a liquid and a gas in counter-current contact, consisting of identical trickling sheets, fastened to one another by their bosses and forming passages between them, characterised in that it is at least partly composed of the trickling sheets according to any one of Claims 1 to 5.

7. Packing device according to Claim 6, characterised in that the corrugations of two contiguous sheets conforming to any one of Claims 1 to 5 are in phase with correspondence of their inter-region lines.

8. Packing device according to Claim 7, characterised in that the distance between two sheets, perpendicular to the median planes of the sheets, is the same everywhere except at the location of the bosses where it is alternately zero and a maximum along the inter-region lines.

FIG. 1

FIG. 2

ZE. | Z.B. | Z.T. | Z.B. | Z.T. | Z.B. | Z.T. | Z.B. | Z.E.

EP 0 391 878 B1

FIG. 3

FIG. 4

FIG. 5

FIG. 8

FIG. 6

FIG. 7

FIG. 10

FIG. 9

14